# EUROPEAN PATENT APPLICATION

(11) **EP 2 225 926 A1**
(43) Date of publication of application: **08.09.2010**
(21) Application number: 10397502.5
(22) Date of filing: 02.03.2010
(51) Int. Cl.: A01B 61/02

(54) **Power transmission arrangement between a tractor and an implement**

(30) Priority: 02.03.2009 FI 20095202
(71) Applicant: LH Lift Oy, 41370 Kuusa (FI)
(72) Inventor: Riipinen, Tapio, 41340, Laukaa (FI); Järvinen, Timo, 41800, Korpilahti (FI)
(74) Representative: Helke, Kimmo Kalervo

(57) **Abstract**

The invention relates to a power transmission arrangement between a tractor and an implement, which includes
- a clutch (3), acting as an overload protector, and its external control means (6, 20) for limiting the maximum value of a load parameter,
- an articulated shaft (10) for feeding power from the tractor to the implement (12),
- the articulated shaft (10) is arranged to withstand the maximum loadings of at least two different implements, and the said control means (6, 20) are arranged to implement the selected implement's protection profile without the protective operation of the articulated shaft.

## Description

The present invention relates to a power transmission arrangement in connection with a transmission line between a tractor and an implement, which includes
- a clutch, acting as an overload protector, for connecting the transmission line to, or disconnecting it from the engine, and control means external to the clutch for limiting the maximum value of a selected load parameter, such as rotation speed or torque,
- a gearbox belonging to the said transmission line, for adapting the rotation speed of the engine to suit the implement,
- an articulated shaft belonging to the transmission line, for feeding power from the tractor to the implement,
- the implement has a protection profile for limiting at least one loading parameter in a selected manner, and
- at least one sensor belonging to the said control means, for detecting the said loading parameter on the transmission line.

For a long time already, many tractor manufacturers have produced various types of gearboxes for power take-off. Up until now, a typical gearbox has been a fixed-step, entirely mechanical gearbox, which is connected to the engine by a hydraulic clutch. Some manufacturers have a manually controlled reversing unit connected to this gearbox.

According to EP publication 443325, the critical running parameters of a tractor are monitored, an alarm received from which causes the PTO to be disconnected with the aid of a hydraulic clutch device. A similar type of overload protection formed by a system, which also protects the implement, is disclosed in publication US 6,729,459. In it, the maximum torque value of the implement is transmitted over, for example, a CAN, ISO, LBS or other data-transfer link. The publication takes no account of the different needs of implements for implementing protection to limit a loading parameter, nor for resetting after a limit.

In recent years, stepless (CVT) gearboxes have also been proposed in connection with power take-off. Patent publication US 6942595 discloses one such PTO system, in which there are, in addition, control means, by which the gearbox is controlled independently of the implement, there being sensors in the implement for measuring loading parameters, which are connected over a data-transfer link (CAN BUS) to the control means. The stepless gearbox and engine are controlled in such a way that the implement has always optimal rotation speed and power. In addition, the system prevents the implement from being overloaded.

For a long time, several manufacturers have had, in addition to a fixed-step cylindrical-gearbox, a optional planet gearbox equipped with a multidisc clutch, to create more gear ratios. Examples can be given from Valmet-Valtra's range, starting already in 1994 (Mezz and Mega models), of driving transmission packages, in which there is the said quick-change gear and lever-actuated reversing. From 1997, it has been possible to choose a multidisc reversing gear. Some models of the type are the Valmet 6000-8750 Delta Powershift and the Valtra 6250-8950 Multidisc shuttle. Other manufacturers have had similar units in different arrangements relating to the driving transmission.

Each implement driven by power take-off has traditionally been equipped with its own articulated shaft, in which there are often overload protectors specific to the implement, to limit the maximum torque. Part of the protection is in the implement itself, but the protection is formed often structurally in the articulated shaft. Often a freewheel is also located in this articulated shaft. The freewheel protects the tractor from a large inertia force coming from the rear.

At least the following protection alternatives are known in implements, one example of each being given here.
A no protection: hydraulic pump unit
B shear bolt: small snow blower or centrifugal spreader
C plate clutch, which slips in a controlled manner: large snow blower
D ratchet clutch, in which the teeth jump over teeth: mower
E freewheel, which allows the implement to rotate freely, this can be combined with cases A - D: mower

Resetting from an overload situation takes place as follows, depending on the implement:
B resetting requires the implement to be stopped, so
   that, for example, a blockage in the implement can be cleared.
C resets by itself when the torque decreases, may require a time delay: generally various harvesters.
D resets by itself when the torque decreases.
E resets by itself when the rpm decreases.

Thus, there may be tens of implements on a farm and each will require a specific form of articulated shaft, which implements the form of protection, i.e. profile for the implement, both in an overload situation and when resetting it to a normal state. At the implement end, the splined shaft is not always of the same type, instead each power class has its own type.

Implements have different abilities to withstand peak loads. With some implements, a momentary overload will lead to the implement stopping, whereas with other implements a considerable overload can be permitted for some time. Due to this, re-connection after disconnection due to an overload takes place in considerably different ways in different implements, i.e. the connection profile is also specific to each implement.

The instructions issued by the implement manufacturer often include additional protection measures to be performed manually, such as a requirement for the implement to be stopped entirely and inspected manually.

All protection measures to be performed automatically and manually form a protection profile specific to each implement. This includes a procedure for entirely disconnecting the implement, or only for limiting the loading parameter. The protection profile can also include instructions for resetting to a normal state. This resetting too is also implement-specific, so that two implements that are disconnected in the same way may require different re-connection routines after disconnection.

The present invention is intended to simplify the arrangement between a tractor and many implements. The characteristic features of the arrangement according to the invention are stated in Claim 1. The power-transmission arrangement according to the invention is suitable for the comprehensive protection of an implement. Even a freewheel function can be implemented through electronic control. According to one preferred embodiment, the number of articulated shafts in use can be reduced to a fraction of the previous number, because a single articulated shaft can be used in place of a group of several articulated shafts, as the protection is implemented in the implement using a selected protection profile entirely in the tractor. Connection profiles independent of the implement are also preferably used as part of the protection profiles, which is implemented using the same system belonging to the tractor. In the tractor, there are preferably software means for saving and implementing each profile both for the limiting part of the protection profile and for connecting. The system simulates in a centralized form all or a large part of the previous protection measures. Preferably, the protection profile or its identifier are transmitted automatically from the connected implement to the tractor.

In one embodiment, the freewheel of the articulated shaft is replaced with an electronic system, which controls a multidisc clutch or other controllable clutch, preventing torque from being transmitted to the engine. The need for the freewheel function is preferably detected on the basis of a backwards-directed torque. The protection profile selected for use will then include the measures relating to this.

Generally, protection of the implement takes place comprehensively on the tractor side. Each protection profile can comprise, in addition to cardan-shaft protection properties, other protections for the implement, such as a function simulating a shear bolt. Other benefits and embodiments of the invention will become apparent in connection with the example applications.

In the following, the invention is described with the aid of examples and the accompanying drawings, in which
- Figure 1: shows the benefit obtained with the invention through the reduction in the number of different articulated shafts,
- Figure 2: shows one power-transmission arrangement, according to the invention, from the engine to an implement,
- Figure 3: shows a flow diagram of the freewheel function, and
- Figure 4: shows a flow diagram of the loading-protection function of an articulated shaft.

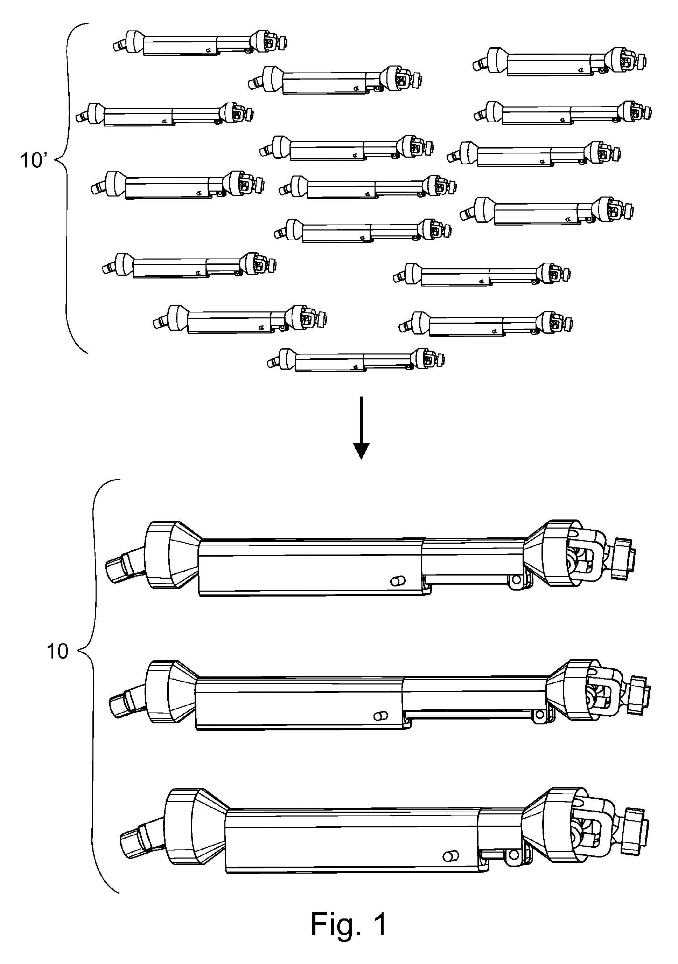

According to Figure 1, a user, such as a farm, may have tens of different types of articulated shaft, in which breaking protection and/or a freewheel may be integrated. The previous group is shown here with the reference number 10' and the new group with the reference number 10. It is hardly appropriate to replace everything with only a single articulated shaft, due, for instance, to the different types of splined shaft at the implement end. Of course, if necessary, implements can be equipped with an intermediate adapter, in order to further expand the use of the same articulated shaft.

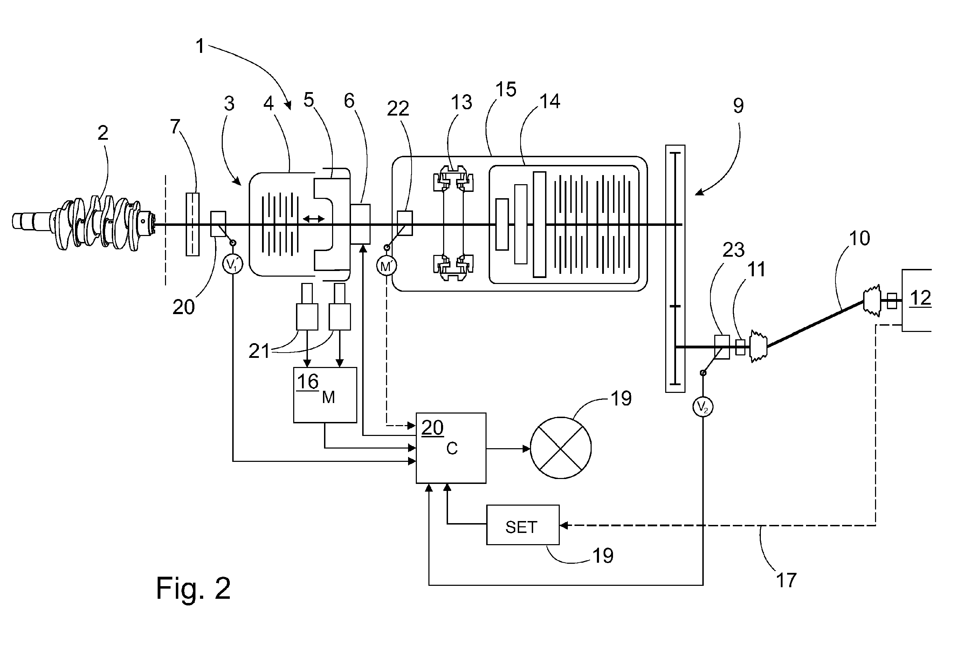

In Figure 2, an implement 12 has been envisaged as being coupled in a conventional manner using the three-point hitch of a tractor 1. However, nothing more of this coupling is shown than the share of the transmission, as well as the possible data-transfer link for transmitting parameter data. This includes the maximum value of the loading, defined by the protection profile. Torque is led from the tractor's 1 engine, which is represented here by a crankshaft 2, through the transmission line to the power take-off (PTO), from which torque is led to the implement 12 by an articulated shaft 10. In this case, the articulated shaft 10 is common to a large group of implements, by being dimensioned according to the largest torque and other maximum loading parameters of the group. The new, common articulated shaft no longer has a mainly protective function.

According to Figure 2, the protection profile can either be entered manually through a terminal 9, or it can be obtained automatically from the implement 12 over a data-transfer bus 17.

In the mechanical coupling, a hydraulically operated multidisc i.e. plate clutch, which is depicted as being of the type disclosed in publication EP496326A2, is connected to the crankshaft 2 by means of a flexible coupling 7. The detailed construction of this can naturally vary widely. The pulling part 4 is coupled to the part 5 being pulled guided by an operating device 6. The multidisc clutch 3 drives a combined quick-change reversing gear 15. The reversing unit 13 and the planet gearbox 14 can be of some known type. The quick-change gear 14 drives a fixed-step cylindrical-gearbox 9, which in turn drives the power take-off 11 (PTO). This is coupled in a known manner by the articulated shaft 10 to the power input of the implement 12. The quick-change reversing gear 15 is not significant in terms of the present invention, so that its operation is not described here. The multidisc clutch implementing the protection profile can also be integrated in such a quick-change gear.

A stepless (CVT) gearbox, such as a variomatic gearbox, can be used instead of the fixed-step gearbox.

To protect the implement 12 from overloading, it is equipped with an articulated shaft designed for it, in which there is often special breaking protection and possibly a freewheel. This implement's own articulated shaft is now replaced with an articulated shaft specially designed for this arrangement, in which there is not necessarily any overloading protection or freewheel. Their tasks are performed with the aid of an electronic control system and a plate clutch.

The safety-measures' control system comprises a torque detector on the transmission line, which can be a detector arrangement like that of the said EP publication, or a separate torque detector 22 measuring directly from the shaft. Detection can take place as in the EP publication, by using sensors 21 to detect a difference in speed ie. a slip over the two halves of the multidisc clutch 3, from which a special comparison element 16 calculates the torque. The measured torque is taken to the control element 20, which compares it with a set limit value. There are numerous other alternatives too for measuring the torque.

Differing from Figure 2, the invention can also be applied if an electric or hydraulic motor, instead of the driving-power engine, is used as the power source. A similar protection arrangement may be necessary irrespective of the power source.

In this example, a separate multidisc clutch 3 can be used as the PTO clutch. Alternatively, the multidisc clutch of the planet gearbox 14 can be used for the same purpose, as, when it is not under pressure, power is not transmitted through it. However, the multidisc clutch may have to be reinforced, as it is not intended to be used to couple the load.

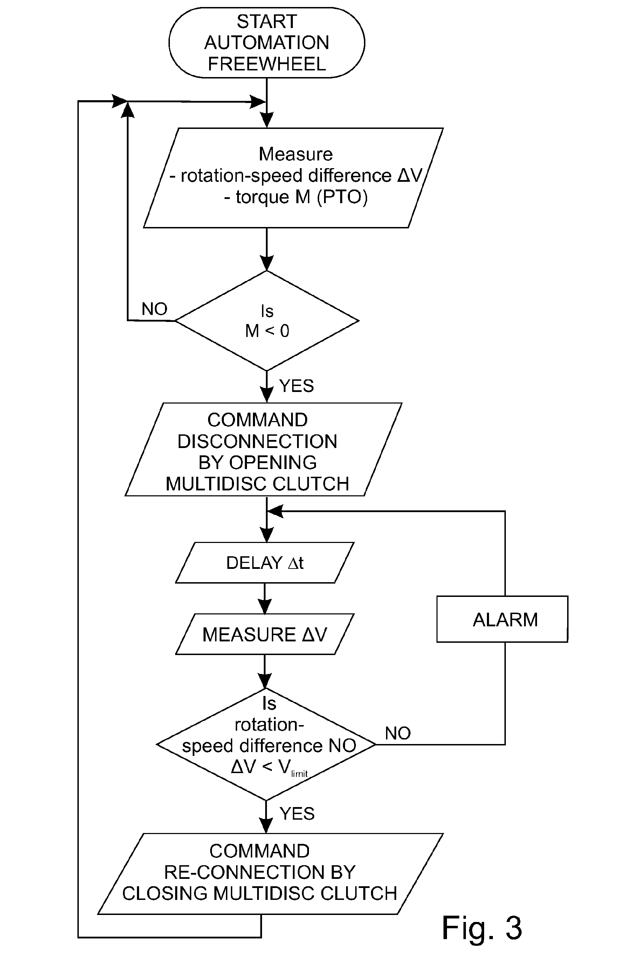

The freewheel function is now explained with the aid of Figure 3. This shows one protection profile, in which there is both a loading-limiting portion and a re-connecting portion. In principle, the function is on full-time, once it has been started. The loop begins in such a way that the rotational speed difference (V₁ - V₂) between the sensors 20 and 23 is measured, in which V₁ is converted according to the transmission ratio to be comparable with the converted engine speed V₁'. At the same time the torque M is measured and is investigated in the following stage to determine if it is negative, i.e. directed towards the engine. As long as the direction of the torque is towards the implement, the loop goes back to measuring, otherwise disconnection is commanded and a delay is made before a new measurement. After it, the speed difference is compared with the set limit value. If the speed difference is in the correct direction, i.e. the shaft of the implement rotates more slowly, re-connection takes place, after which a return to measuring the torque is made, otherwise, after a delay, a return is made to a new speed measurement.

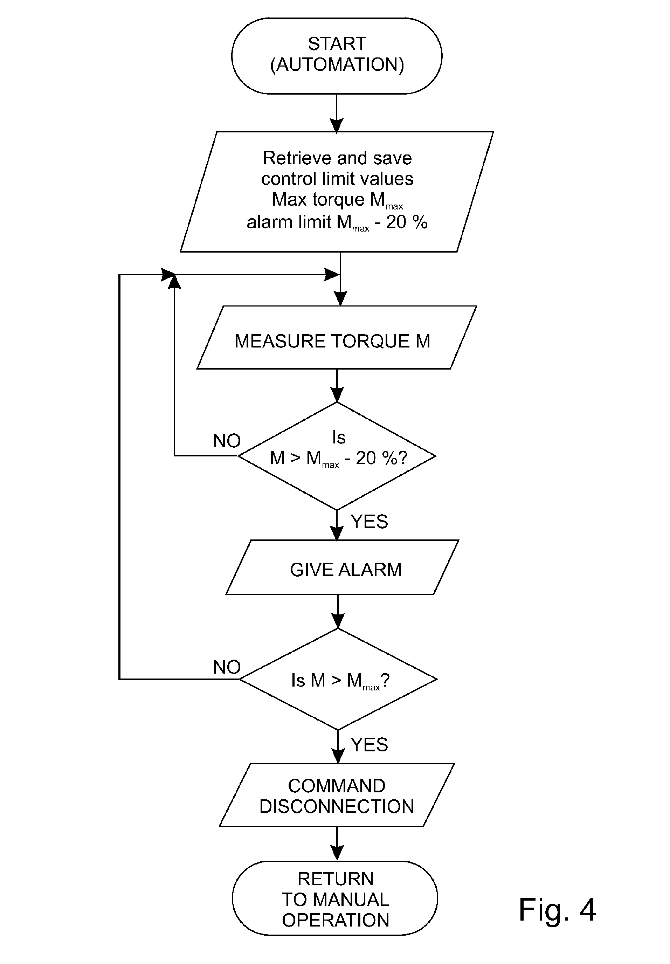

According to the protection profile shown in Figure 4, the overload function of the articulated shaft is always on, unless disconnection occurs, in which case the function is switched on manually. Initially, the control limit values, the articulated shaft's maximum torque Mₘₐₓ, and the alarm limit, generally a value 20 % lower, are retrieved and saved. In this case, re-connection after disconnection requires manual operations, which can be given by the display device belonging to the arrangement, if such is used.

In the loop, the torque is first measured. Next, the measured value is compared with the alarm limit and a return takes place to measuring, if the limit is not exceeded. If it is exceeded, a alarm is given, by the lamp 19 shown schematically in Figure 2, or a sound signal, and a move is made to the comparison of the maximum torque. If this is not exceeded, a return is made to the torque measurement at the start of the loop. If the set limit is exceeded, disconnection is commanded and a transfer made to manual operation. Re-connection then takes place manually, once the operator has first checked that connection can take place safely. Preferably, as the loading approaches the disconnection limit, the operator is given alarms in steps, with the aid of a suitable display device. In this case, the said 'set limit' can be a function of a preset loading and its duration, because, depending on the implement, an overload of a specific duration may be permitted.

The transmission ability of the coupling of the clutch achieved by the protection function is preferably at least 40 %, and more preferably at least 60 % of the nominal torque. Thus, in such a case a larger clutch must be selected than would otherwise be required by the implement itself. One advantageous clutch type is a multidisc clutch, which can be loaded at a high power and can perform consecutive connections and disconnections.

Generally, the gearbox package according to Figure 2 can contain the following types of combination:
1) quick-change gear + mechanical reduction gear
2) quick-change gear + mechanical reversing gear + mechanical reduction gear
3) quick-change gear + hydraulic multidisc reversing gear + mechanical reduction gear.

In the first two combinations, quick-change multidisc clutches act as the overloading protection and freewheel, whereas in the third combination their operation is performed by the hydraulic multidisc reversing gear. The clutch is controlled electronically by a controller, which, according to the rotation speed and information obtained from the torque sensors, correspondingly opens the multidisc clutch in order to protect the system.

The parameter data is preferably stored to be connected along with the common coupling assembly, which comprises hydraulic and electrical connections between the tractor and the implement (not shown).

## Claims

1. Power transmission arrangement in connection with a transmission line between a tractor (1) and an implement (12), which includes
- a clutch (3), acting as an overload protector, for connecting the transmission line to, or disconnecting it from the engine and control means (6, 20) external to the clutch (3) for limiting the maximum value of a selected load parameter, such as rotation speed or torque,
- a gearbox (14, 9) belonging to the said transmission line, for adapting the rotation speed of the engine to suit the implement (12),
- an articulated shaft (10) belonging to the transmission line, for feeding power from the tractor to the implement (12),
- the implement has a protection profile set, for limiting at least one loading parameter in a selected manner, and
- at least one sensor (21, 22) belonging to the said control means, for detecting the said loading parameter on the transmission line,
**characterized in that** the said control means (6, 20) are arranged to implement the selected implement's protection profile, selected through the clutch, in order limit the loading parameter, without the protective operation of the articulated shaft.

2. Power transmission arrangement according to Claim 1, **characterized in that** the said protection profile includes a connection portion, for controlling connection after said limiting has been imposed.

3. Power transmission arrangement (10) according to Claim 1 or 2, **characterized in that** the control means are arranged to control the said clutch by implementing a freewheel function.

4. Power transmission arrangement (10) according to any of Claims 1 - 3, **characterized in that** it includes data-transfer means (17) for receiving the maximum value of the said loading parameter of the parameter data entered in the implement.

5. Power transmission arrangement (10) according to Claim 4,
**characterized in that** the parameter data are stored for use along with the common coupling assembly, which comprises hydraulic and electric connections between the tractor and the implement.

6. Power transmission arrangement (10) according to any of Claims 1 - 3, **characterized in that** it includes quick-selection means (19) for selecting the parameters of the implement (12), the parameters determining the said maximum value of the loading.

7. Arrangement (10) according to any of Claims 1 - 6 in connection with a planet gearbox, **characterized in that** the overload protection and/or freewheel function are arranged to use the multidisc clutch of the planet gearbox.

8. Arrangement (10) according to any of Claims 1 - 7, **characterized in that** the power-transmission ability of the coupling of the said clutch (3) is at least 40 %, preferably at least 60 % of the nominal torque.

9. Arrangement (10) according to any of Claims 1 -8, **characterized in that** the said clutch (3) is a multidisc clutch.

10. Arrangement (10) according to any of Claims 1 - 9, **characterized in that** the articulated shaft (10) is arranged to withstand the maximum loadings of at least two different implements.
